# EUROPÄISCHE PATENTSCHRIFT

(11) **EP 3 596 148 B1**
(45) Veröffentlichungstag und Bekanntmachung des Hinweises auf die Patenterteilung: **19.05.2021**
(21) Anmeldenummer: 18708433.0
(22) Anmeldetag: 07.03.2018
(51) Int. Cl.: C08G 18/48, C08G 18/12, C08G 18/18, C08G 18/20, C08G 18/24, C08G 18/32, C08G 18/34, C08G 18/42, B29D 35/02, C08G 101/00, A43B 3/02, A43B 23/02, B29D 35/00

(54) **VERFAHREN ZUR HERSTELLUNG VON POLYURETHAN-STIEFELN**
METHOD FOR PRODUCING POLYURETHANE BOOTS
PROCÉDÉ DESTINÉ À LA FABRICATION DE BOTTES EN POLYURÉTHANE

(30) Priorität: 16.03.2017 EP 17161328
(43) Veröffentlichungstag der Anmeldung: 22.01.2020
(73) Patentinhaber: BASF SE, 67056 Ludwigshafen am Rhein (DE)
(72) Erfinder: DOROODIAN, Amir, 49448 Lemfoerde (DE); ORTALDA, Marco, 14019 Villanova d'Asti (AT) (IT); BARAVALLE, Cristian, 14019 Villanova d'Asti (AT) (IT); FRENZEL, Robert, 49448 Lemfoerde (DE)
(74) Vertreter: BASF IP Association
(86) Internationale Anmeldenummer: PCT/EP2018/055632
(87) Internationale Veröffentlichungsnummer: WO 2018/166870

(56) Entgegenhaltungen:
- EP-A1- 0 989 146
- GB-A- 1 388 949

## Beschreibung

Die vorliegende Erfindung betrifft ein Verfahren zur Herstellung von Polyurethan-Stiefeln bei dem man
a) organische Polyisocyanate mit
b) Polyolen,
c) Kettenverlängerer,
d) Treibmittel,
e) Katalysator und
f) gegebenenfalls sonstigen Hilfsmittel und/oder Zusatzstoffe
zu einer Reaktionsmischung vermischt, und mit nur einer Einspritzung in eine Form gibt, die Sohle und Schaft des Stiefels umfasst und zu einem Polyurethan-Stiefel ausreagieren lässt, dadurch gekennzeichnet, dass zumindest ein Katalysator umfassend ein tertiäres Amin und Sebazinsäure in einem Molverhältnis von tertiärem Amin und Sebazinsäure von 1 : 0,19 bis 0,27 eingesetzt wird.

Polyurethan(PU)-Stiefel bestehen üblicherweise aus zwei unterschiedlichen Teilen: dem Schaft und der Sohle. In den bisher bekannten Verfahren zur Herstellung von PU-Stiefeln wird die Sohle und der Schaft jeweils durch eine separate Einspritzung des Materials in die Form hergestellt. Die Rezepturen für den Schaft und die Sohle unterscheiden sich und jeder dieser Teile benötigt eine bestimmte Aushärtezeit vor Einspritzung des anderen Teils. Diese Verarbeitung führt zu einer langsamen Produktion, höheren Herstellungskosten und die Stiefel haben teilweise Probleme mit der Haftung zwischen dem Schaft und der Sohle.

Ziel dieser Erfindung war es, ein PU-System zu entwickeln, dass den kompletten Stiefel mit einem Materialschuss in die Form herstellen kann. Dafür muss die Startzeit (Anfang der Reaktion) länger als die Schusszeit in die Form sein und die Fließfähigkeit der reaktiven Mischung muss für die Anwendung geeignet sein, da die Mischung den kompletten Schaft in der vorgegebenen Zeit füllen muss. Daher sollte die Startzeit des Schaumsystems über 15sec liegen. Zusätzlich sollte das Material in weniger als 7 Minuten aushärten, um eine vernünftige Produktivität zu gewährleisten und die Entformzeit und Knickzeit sollten so kurz wie möglich sein.

Überaschenderweise löst das eingangs beschriebene Verfahren die anspruchsvolle Aufgabe, wobei als Katalysator eine Mischung aus einem tertiärem Amin und Sebazinsäure zum Einsatz gelangt.

EP-A 989 146 beschreibt allgemein Katalysatorsyteme zur Herstellung von Polyurethanen, die aus tertiären Aminen und aliphatischen Dicarbonsäuren bestehen. Die dort beschriebenen Molverhältnisse von tertärem Amin zu Dicarbonsäure von 1 : 0,4 bis 1 : 1 sind jedoch für das erfindungsgemäße Verfahren nicht geeignet.

Im Folgenden wird das erfindungsgemäße Verfahren näher beschrieben. Bei den erfindungsgemäßen PU-Stiefeln handelt es sich um elastomere Polyurethanschaumstoffe, vorzugsweise Polyurethanintegralschaumstoffe. Unter einen elastomeren Polyurethanschaumstoff sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 5 % ihrer Ausgangsdicke aufweisen. Als Polyurethanintegralschaumstoffe im Sinn der Erfindung werden Polyurethan-Schaumstoffe nach DIN 7726 mit einer Randzone, die bedingt durch den Formgebungsprozess eine höhere Dichte als der Kern aufweist, verstanden. Die über den Kern und die Randzone gemittelte Gesamtrohdichte liegt dabei vorzugsweise zwischen 150 g/L und 950 g/L bevorzugt von 300 g/L bis 800 g/L, besonders bevorzugt 350 g/L bis 700 g/L.

Die zur Herstellung der erfindungsgemäßen Polyurethanschaumstoffformkörper verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind Methandiphenyldiisocyanat (MDI), Tetramethylendiisocyanat, Hexamethylendiisocyanat (HDI), Isophorondiisocyanat (IPDI), 2,4- oder 2,6-Toluylendiisocyanat (TDI) oder Mischungen der genannten Isocyanate. MDI umfasst monomeres Metandiphenyldiisocyanat (MMDI), wie 4,4'-Metandiphenyldiisocyanat, 2,4'-Metandiphenyldiisocyanat, und die Mischungen aus monomeren Metandiphenyldiisocyanaten und höherkernigen Homologen des Metandiphenyldiisocyanats (Polymer-MDI).

Bevorzugt wird 4,4'-MDI verwendet. Das bevorzugt verwendete 4,4'-MDI kann 0 bis 20 Gew.-% 2,4' MDI und geringe Mengen, bis etwa 10 Gew.-%, allophanat- carbodiimid- oder uretoniminmodifiziertes 4,4' MDI enthalten. Neben 4,4' MDI können auch geringe Mengen 2,4'-MDI und/oder Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Isocyanate a1) können direkt oder in Form ihrer Prepolymere eingesetzt werden. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Verbindungen mit mindestens zwei gegenüber Isocyanat reaktiven Wasserstoffatomen (a-2), zum Prepolymer umgesetzt werden.

Als Verbindungen mit mindestens zwei gegenüber Isocyanat aktiven Gruppen (a-2) kommen die weiter unten beschriebenen Polyole b in Frage, die dem Fachmann bekannt sind und beispielsweise beschrieben im "Kunststoffhandbuch, Band 7, Polyurethane", Carl Hanser Verlag, 3. Auflage 1993, Kapitel 3.1 beschrieben werden. Vorzugsweise werden dabei die unter b1) beschriebenen Polyesterpolyole eingesetzt. Vorzugsweise enthält das MDI oder die Prepolymere von MDI, bezogen auf das Gesamtgewicht des MDI einschließlich des zur Herstellung der Prepolymere eingesetzten MDI, mehr als 80 Gew.-%, 4,4'-MDI. Dabei enthält das MDI vorzugsweise 0,5 bis 10 Gew.-% carbodiimidmodifiziertes MDI, insbesondere carbodiimidmodifiziertes 4,4'-MDI.

Die Polyole (b) enthalten Polyesterpolyole (b1) und Polyetherole (b2). Als Polyesterpolyole (b1) werden Polyesterpolyole mit mindestens zwei gegen Isocyanatgruppen reaktiven Wasserstoffatomen eingesetzt. Vorzugsweise weisen Polyesterpolyole ein zahlenmittleres Molekulargewicht von größer 450 g/mol, besonders bevorzugt von größer 500 bis kleiner 8.000 g/mol und insbesondere von 600 bis 3.500 g/mol und eine Funktionalität von 2 bis 4, insbesondere von 2 bis 3, auf.

Polyesterpolyole (b1) können beispielsweise aus organischen Dicarbonsäuren mit 2 bis 12 Kohlenstoffatomen, vorzugsweise aliphatischen Dicarbonsäuren mit 4 bis 10 und insbesondere 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole (b1) können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert.

Als Polyesterpolyole (b1) eignen sich ferner polymermodifizierte Polyesterpolyole, vorzugsweise Pfropf-Polyesterpolyole. Hierbei handelt es sich um ein sogenanntes Polymerpolyesterpolyol, welches üblicherweise einen Gehalt an, bevorzugt thermoplastischen, Polymeren von 5 bis 60 Gew.-%, bevorzugt 10 bis 55 Gew.-%, besonders bevorzugt 15 bis 50 Gew.-% und insbesondere 20 bis 40 Gew.-%, aufweist. Diese Polymerpolyesterpolyole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth) Acrylsäure und/oder Acrylamid, in einem als Pfropfgrundlage dienenden Polyesterpolyol hergestellt. Das Polymer-Polyesterpolyol enthält neben dem Pfropfcopolymerisaten überwiegend die Homopolymere der Olefine, dispergiert in unverändertem Polyesterpolyol.

In einer bevorzugten Ausführungsform werden als Monomere Acrylnitril, Styrol, bevorzugt Acrylnitril und Styrol verwendet. Die Monomere werden gegebenenfalls in Gegenwart weiterer Monomere, eines Makromers, d.h. eines ungesättigten, radikalisch polymerisierbaren Polyols, eines Moderators und unter Einsatz eines Radikal-Initiators, meist Azo- oder Peroxidverbindungen, in einem Polyesterpolyol als kontinuierlicher Phase polymerisiert. Dieses Verfahren ist beispielsweise in US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- und einem Poly-acrylnitril-styrol-Block, welche in der Grenzfläche von kontinuierlicher Phase und dispergierter Phase als Phasenvermittler wirken und das Agglomerieren der Polymerpolyesterpolyolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist Polymerpolyesterpolyol enthalten, liegt dies vorzugsweise zusammen mit weiteren Polyesterpolyolen vor. Besonders bevorzugt ist der Anteil an Polymerpolyol größer als 5 Gew.-%, bezogen auf das Gesamtgewicht der Komponente (b). Die Polymerpolyesterpolyole können beispielsweise, bezogen auf das Gesamtgewicht der Komponente (b), in einer Menge von 7 bis 90 Gew.-%, oder von 11 bis 80 Gew.-% enthalten sein.

Neben Polyesterpolyolen (b1) können auch weitere, in der Polyurethanchemie übliche Polyole mit einem zahlenmittleren Molekulargewicht von größer 500 g/mol, beispielsweise Polyetherole (b2), eingesetzt werden. Dabei beträgt aber der Anteil der weiteren Polyole vorzugsweise weniger als 40 Gew.-%, besonders bevorzugt weniger als 20 Gew.-%, ganz besonders bevorzugt weniger als 10 Gew.-% weiter bevorzugt weniger als 5 Gew.-% und insbesondere 0 Gew.-%, bezogen auf das Gesamtgewicht an Polyesterpolyolen (b) und den weiteren Polyolen.

Die Polyetherpolyole (b2) können auch anstelle der Polyesterpolyolen (b1) eingesetzt werden. Als Polyetherpolyole (b2) werden Polyetherpolyole mit einer mittleren Funktionalität von größer 2,0 eingesetzt. Geeignete Polyetherpolyole können nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat, oder Kaliumisopropylat oder durch kationische Polymerisation mit Lewis-Säuren, wie Antimonpentachlorid und Borfluorid-Etherat als Katalysatoren und unter Zusatz mindestens eines Startermoleküls, das vorzugsweise 2 bis 4 reaktive Wasserstoffatome gebunden enthält, aus einem oder mehreren Alkylenoxiden mit vorzugsweise 2 bis 4 Kohlenstoffatomen im Alkylenrest hergestellt werden.

Geeignete Alkylenoxide sind beispielsweise 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Als Startermolekül kommen beispielsweise Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polyetherpolyole (b2), vorzugsweise Polyoxypropylen- und Polyoxypropylen-polyoxyethylenpolyole, besitzen eine mittlere Funktionalität von vorzugsweise 2,01 bis 3,50, besonders bevorzugt 2,25 bis 3,10 und ganz besonders bevorzugt von 2,4 bis 2,8. Insbesondere werden Polyetherpolyole eingesetzt, die ausschließlich ausgehend von trifunktionellen Startermolekülen erhalten wurden. Die Molekulargewichte der Polyetherpolyole (b2) betragen vorzugsweise 1000 bis 10000, besonders bevorzugt 1800 bis 8000 und insbesondere 2400 bis 6000 g/mol.

Vorzugsweise werden Polyetherpolyole (b2) auf Basis von Propylenoxyd, die endständig gebundene Ethylenoxideinheiten aufweisen, eingesetzt. Dabei beträgt der Gehalt an endständig gebundenen Etylenoxideinheiten vorzugsweise 10 bis 25 Gew.-%, bezogen auf das Gesamtgewicht des Polyetherpolyols (b2).

Als Polymerpolyetherpolyole (b2) werden Polyetherpolyole eingesetzt, die üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweisen. Diese Polymerpolyetherpolyole sind bekannt und kommerziell erhältlich und werden üblicherweise durch radikalische Polymerisation von olefinisch ungesättigten Monomeren, vorzugsweise Acrylniltril, Styrol, sowie gegebenenfalls weiterer Monomerer, eines Makromers und gegebenenfalls eines Moderators unter Einsatz eines Radikal-Initiators, meist Azo-oder Peroxidverbindungen, in einem Polyetherol als kontinuierliche Phase hergestellt. Das Polyetherol, das die kontinuierliche Phase darstellt, wird häufig als Trägerpolyol bezeichnet. Beispielhaft für die Herstellung von Polymerpolyolen sind hier die Patentschriften US 4568705, US 5830944, EP 163188, EP 365986, EP 439755, EP 664306, EP 622384, EP 894812 und WO 00/59971 zu nennen.

Üblicherweise ist das eine in situ Polymerisation von Acrylnitril, Styrol oder vorzugsweise Mischungen aus Styrol und Acrylnitril, z.B. im Gewichtsverhältnis 90:10 bis 10:90 vorzugsweise 70:30 bis 30:70.

Als Trägerpolyole kommen alle poyetherbasierten Polyole, vorzugsweise solche wie unter b) beschrieben, in Frage. Makromere, auch als Stabilisatoren bezeichnet, sind lineare oder verzweigte Polyetherole mit Molekulargewichten größer oder gleich 1000 g/mol, die mindestens eine endständige, reaktionsfähige olefinische ungesättigte Gruppe enthalten. Die ethylenisch ungesättigte Gruppe kann über Reaktion mit Carbonsäure-Anhydriden, wie Maleinsäureanhydrid, Fumarsäure, Acrylat- und Methacrylat-derivaten sowie Isocyanat-Derivaten, wie 3-Isopropenyl-1,1-dimethylbenzyl-Isocyanat, Isocyanato-ethylmethacrylat, an ein bereits bestehendes Polyol angefügt werden. Ein weiterer Weg ist die Herstellung eines Polyols durch Alkoxydation von Propylenoxid und Ethylenoxid unter Verwendung von Startmolekülen mit Hydroxylgruppen und einer ethylenischen Ungesättigtheit. Beispiele für solche Makromere sind in den Dokumenten US 4390645, US 5364906, EP 0461800, US 4997857, US 5358984, US 5990232, WO 01/04178 und US 6013731 beschrieben.

Während der radikalischen Polymerisation werden die Makromere mit in die Copolymerkette eingebaut. Dadurch bilden sich Blockcopolymere mit einem Polyether- und einem Poly-Acrylnitril-Styrol-Block, welche in der Grenzfläche von kontinuierlicher Phase und dispergierter Phase als Phasenvermittler wirken und das Agglomerieren der Polymerpolyolpartikel unterdrücken. Der Anteil der Makromere beträgt üblicherweise 1 bis 15 Gew.-%, bevorzugt 3 bis 10 Gew.-%, bezogen auf das Gesamtgewicht der zur Herstellung des Polymerpolyols eingesetzten Monomere.

Zur Herstellung von Polymerpolyolen werden üblicherweise Moderatoren, auch als Kettenüberträger bezeichnet, eingesetzt. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Polymerpolyole beeinflusst. Der Anteil der Moderatoren beträgt üblicherweise 0,5 bis 25 Gew.-%, bezogen auf das Gesamtgewicht der zur Herstellung des Polymerpolyols eingesetzten Monomere. Moderatoren, die üblicherweise zur Herstellung von Polymerpolyolen eingesetzt werden, sind Alkohole, wie 1-Butanol, 2-Butanol, Isopropanol, Ethanol, Methanol, Cyclohexan, Toluol, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und a-(Benzoyloxy)styren. Bevorzugt wird Alkylmercaptan verwendet.

Zur Initiierung der radikalischen Polymersisation werden üblicherweise Peroxid- oder Azo-Verbindungen, wie Dibenzoyl-peroxide, Lauroylperoxide, t-Amylperoxy-2-ethylhexanoate, Di-t-butylperoxide, Diisopropyl peroxide carbonate, t-Butyl peroxy-2-ethylhexanoate, t-Butylperpivalate, t-Butylperneo-decanoate, t-Butylperbenzoate, t-Butyl percrotonate, t-Butyl perisobutyrate, t-Butylperoxy-1-methylpropanoate, t-Butylperoxy-2-ethylpentanoate, t-Butylperoxyoctanoate und Di-t-butylperphthalate, 2,2'-Azobis(2,4-dimethyl-valeronitrile), 2,2'-Azobisisobutyronitrile (AIBN), Dimethyl-2,2'-azobisisobutyrate, 2,2'-Azobis(2-methylbutyronitrile) (AMBN), 1,1'-Azobis(1-cyclohexanecarbonitrile), eingesetzt. Der Anteil der Initiatoren beträgt üblicherweise 0,1 bis 6 Gew.-%, bezogen auf das Gesamtgewicht der zur Herstellung des Polymerpolyols eingesetzten Monomere.

Die radikalische Polymerisation zur Herstellung von Polymerpolyolen wird aufgrund der Reaktionsgeschwindigkeit der Monomere sowie der Halbwertszeit der Initiatoren üblicherweise bei Temperaturen von 70 bis 150°C und einem Druck bis zu 20 bar durchgeführt. Bevorzugte Reaktionsbedingungen zur Herstellung von Polymerpolyolen sind Temperaturen von 80 bis 140°C bei einem Druck von Atmosphärendruck bis 15 bar.

Polymerpolyole werden in kontinuierlichen Verfahren, unter Einsatz von Rührkesseln mit kontinuierlichem Zu- und Ablauf, Rührkesselkaskaden, Rohrreaktoren und Loopreaktoren mit kontinuierlichem Zu- und Ablauf, oder in diskontinuierlichen Verfahren, mittels eines Batch Reaktors oder eines Semi-Batch Reaktors, hergestellt.

Vorzugsweise ist der Anteil an Polymerpoyletherpolyol (b2) größer als 5 Gew.-%, bezogen auf das Gesamtgewicht der Komponenten (b). Die Polymerpolyetherpolyole können, bezogen auf das Gesamtgewicht der Komponenten (b) beispielsweise in einer Menge von 7 bis 90 Gew.-%, oder von 11 bis 80 Gew.-% enthalten sein.

Weiter kann die erfindungsgemäße Polyurethankomponente sogenannte Kettenverlängerungsmittel und/oder Vernetzungsmittel (c) enthalten. Als Kettenverlängerungsmittel und/oder Vernetzungsmittel werden Substanzen mit einem Molekulargewicht von vorzugsweise kleiner 450 g/mol, besonders bevorzugt von 60 bis 400 g/mol verstanden, wobei Kettenverlängerer 2 gegenüber Isocyanaten reaktive Wasserstoffatome und Vernetzungsmittel 3 gegenüber Isocyanat reaktive Wasserstoffatome aufweisen. Diese können bevorzugt einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (f) Monoethylenglycol, 1,4-Butandiol, Diethylengylcol, Glycerin oder Mischungen davon eingesetzt.

Sofern Kettenverlängerungsmittel, Vernetzungsmittel oder Mischungen davon (c), Anwendung finden, kommen diese zweckmäßigerweise in Mengen von 1 bis 40 Gew.-%, vorzugsweise 1,5 bis 20 Gew.-% und insbesondere 2 bis 10 Gew.-%, bezogen auf das Gesamtgewicht der Komponenten (b) bis (f), zum Einsatz.

Ferner sind bei der Herstellung von Polyurethanschaumstoffformkörpern Treibmittel d) zugegen. Diese Treibmittel d) können Wasser enthalten. Als Treibmittel d) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise (cyclo)aliphatische Kohlenwasserstoffe mit 4 bis 8 Kohlenstoffatomen, oder Fluorkohlenwasserstoffe, wie Solkane® 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel. Wird kein Wasser als Treibmittel eingesetzt, werden vorzugsweise ausschließlich physikalische Treibmittel verwendet.

Der Gehalt an Wasser beträgt in einer bevorzugten Ausführungsform von 0,1 bis 2 Gew.-%, bevorzugt 0,2 bis 1,5 Gew.-%, besonders bevorzugt 0,3 bis 1,2 Gew.-%, bezogen auf das Gesamtgewicht der Komponenten (b) bis (f).

In einer weiteren bevorzugten Ausführungsform werden der Umsetzung der Komponenten (a) bis (f) als zusätzliches Treibmittel Mikrohohlkugeln, die physikalisches Treibmittel enthalten, zugegeben. Die Mikrohohlkugeln können auch im Gemisch mit den vorstehend genannten Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im Allgemeinen einen Durchmesser von 5 bis 50 µm auf. Beispiele für geeignete Mikrohohlkugeln sind unter dem Handelsnamen Expancell® der Firma Akzo Nobel erhältlich.

Die Mikrohohlkugeln werden im Allgemeinen in einer Menge von 0,5 bis 5 Gew.-%, bezogen auf das Gesamtgewicht der Komponenten (b) bis (f) zugesetzt.

Als Katalysatoren (e) zur Herstellung der Polyurethan-Stiefel werden bevorzugt Verbindungen verwendet, welche die Reaktion der Polyole (b) mit den organischen, gegebenenfalls modifizierten Polyisocyanaten (a) stark beschleunigen. Als Katalysatoren (e) wird eine Kombination aus mindestens einem tertiären Amin (e1) und Sebazinsäure (e2) eingesetzt. Daneben können noch weitere Katalysatoren (e3) zum Einsatz gelangen.

Das molare Verhältnis des tertiären Amins e1 zur Sebazinsäure e2 beträgt 1 : 0,19 bis 0,27.

Unter teriären Aminen (e1) werden beispielsweise Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Pentamethyl-dipropylentriamin, Tetramethyl-diaminoethylether, Bis-(dimethylaminopropyl)-harnstoff, Dimethylpiperazin, 1,2-Dimethylimidazol, Alkanolaminverbindungen, wie Triethanolamin, Triisopropanolamin, N-Methyl- und N-Ethyl-diethanolamin und Dimethylethanolamin, 1-Aza-bicyclo-(3,3,0)-octan und vorzugsweise Pentamethyl-diethylentriamin, Pentamethyl-dipropylentriamin und insbesondere bevorzugt 1,4-Diaza-bicyclo-(2,2,2)-octan (DABCO; im Folgenden auch Triethylendiamin genannt) verstanden.

Werden Polyesterole (b1) als Polyole (b) eingesetzt, so hat sich insbesondere Triethylendiamin als vorteilhaft erwiesen. Das tertiäre Amin wird in diesen Polyolkomponenten in der Regel in 0,2 bis 1 Gew.-% und vorzugsweise in 0,3 bis 0,5 Gew.-%, bezogen auf das Gewicht der Komponenten (b) bis (f), eingesetzt.

Werden Polyetherole (b2) als Polyole (b) eingesetzt, so hat sich insbesondere Triethylendiamin, Pentamethyl-diethylentriamin und Pentamethyl-dipropylentriamin oder inbesondere eine Kombination aus Triethylendiamin und Pentamethyl-dipropylentriamin als vorteilhaft erwiesen. Das tertiäre Amin wird in diesen Polyolkomponenten in der Regel in 0,6 bis 1,3 Gew.-% und vorzugsweise in 0,8 bis 1,2 Gew.-%, bezogen auf das Gewicht der Komponenten (b) bis (f), eingesetzt.

Als zusätzliche Katalysatoren (e3) kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon in Betracht.

Vorzugsweise verwendet werden die zusätzlichen Katalysatoren (e3) in 0,001 bis 0,5 Gew.-%, insbesondere 0,01 bis 0,1 Gew.-%, bezogen auf das Gewicht der Komponenten (b) bis (f).

Der Reaktionsmischung zur Herstellung der Polyurethanschäume können gegebenenfalls auch noch Hilfsmittel und/oder Zusatzstoffe (f) zugegeben werden. Genannt seien beispielsweise Trennmittel, Füllstoffe, Farbstoffe, Pigmente, Hydrolyseschutzmittel, antistatische Additive, geruchsabsorbierende Substanzen und fungistatische und/oder bakteriostatisch wirkende Substanzen.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise enthalten erfindungsgemäße Reaktionsmischungen keine weiteren Trennmittel.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im Einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat. Als organische Füllstoffe kommen beispielsweise in Betracht: Ruß, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (f), zugegeben.

Die Hydrolysestabilität von Polyesterpolyurethanen kann durch die Zugabe von Additiven, wie Carbodiimiden, deutlich verbessert werden. Solche Materialien sind kommerziell unter Handelsnamen wie z.B. Elastostab™ oder Stabaxol™ erhältlich.

Als antistatische Additive können übliche, für Polyurethane bekannte antistatische Additive eingesetzt werden. Diese umfassen quaternäre Ammoniumsalze und ionische Flüssigkeiten.

In dem erfindungsgemäßen Verfahren werden die Ausgangskomponente (a) bis (f) in solchen Mengen miteinander vermischt, dass das theoretischen Äquivalenzverhältnis von NCO-Gruppen der Polyisocyanate (a) zur Summe der reaktiven Wasserstoffatome der Komponenten (b) bis (e) und (f) 1 : 0,8 bis 1 : 1,25, vorzugsweise 1 : 0,9 bis 1 : 1,15 beträgt. Dabei entspricht ein Verhältnis von 1 : 1 einem Isocyanatindex von 100. Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden.

Gegenstand der vorliegenden Erfindung ist weiterhin ein Polyurethanformkörper, erhältlich nach dem erfindungsgemäßen Verfahren.

Die erfindungsgemäßen Polyurethanschaumstoffformkörper werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff', Carl-Hanser-Verlag, München, Wien, 1975, oder im "Kunststoff-handbuch", Band 7, Polyurethane, 3. Auflage, 1993, Kapitel 7.

Die Ausgangskomponenten (a) bis (f) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten (a) bis (f) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper, insbesondere Integralschaumstoff eine Dichte von vorzugsweise 150 g/L bis 950 g/L bevorzugt von 300g/L bis 800 g/L, besonders bevorzugt 350 g/L bis 700 g/L aufweisen. Die Verdichtungsgrade zur Herstellung der erfindungsgemäßen Polyurethanintegralschaumstoffe liegen im Bereich von 1,1 bis 4, vorzugsweise von 1,6 bis 3.

Vorzugsweise wird im zwei-Komponenten-Verfahren gearbeitet. Dazu wird eine Isocyanatkomponente mit einer Polyolkomponente gemischt. Dabei umfasst die Isocyanatkomponente die Isocyanate (a) und die Polyolkomponente (b), den Kettenverlängerer (c) und, sofern chemische Treibmittel wie beispielsweise Wasser eingesetzt werden, Treibmittel (d). Vorzugsweise umfasst die Polyolkomponente weiterhin die Katalysatoren (e). Auch die Hilfs und Zusatzstoffe (f) werden vorzugsweise der Polyolkomponente zugegeben. Die Komponente (e) kann sowohl der Isocyanat- als auch der Polyolkomponente zugegeben werden. Dabei ist die Polyolkomponente lagerstabil und entmischt nicht. Zur Herstellung der erfindungsgemäßen Polyurethanformkörper werden dann die Isocyanatkomponente und die Polyolkomponente gemischt und wie oben beschrieben verarbeitet.

Das erfindungsgemäße Verfahren ist zur Herstellung von kostengünstigen Polyurethan-Stiefeln geeignet. Prinzipiell können erfindungsgemäße Polyurethanschaumstoffe im Innenbereich von Verkehrsmitteln beispielsweise in Autos als Lenkräder, Kopfstützen oder Schaltknöpfe oder als Stuhlarmlehnen verwendet werden. Weitere Verwendungsmöglichkeiten sind als Armlehne für Stühle oder als Motorradsitze. Weitere mögliche Anwendungen sind Anwendungen, Dichtmassen, Dämpfungsmatten, Trittschalldämmung, Skischuhekonstruktionselemente oder in Anwendungen, die in kältere Umgebungen benutzt werden. Erfindungsgemäße Polyurethanformkörper zeigen hervorragende mechanische Eigenschaften, insbesonders eine hervorragende Kälteflexibilität, hervorragende mechanische Eigenschaften nach Feucht-Wärmelagerung und einen nur geringen Abrieb.

Im Folgenden soll die Erfindung anhand von Beispielen verdeutlicht werden.

In den Beispielen 1 und 2 wurde das erfindungsgemäße Verfahren auf einer DESMA-Maschine für Stiefel untersucht. Das Volumen der Stiefelform betrug 1,13 Liter. Um die geforderte Schaumdichte des Stiefels zu erreichen, benötigte man 850g PU-Material. Bei einem Austrag von 550g/sec ergab sich eine Füllzeit des Stiefels von 15sec.

### Beispiele 1 (Polyesterol (b1)-basiert)

Folgende Verbindungen wurden eingesetzt:

| | |
|---|---|
| Iso a-1: | Isocyanat-Prepolymer der Firma BASF auf Basis von 4.4-MDI, modifizierten Isocyanataen und einem Gemisch von Polyesterolen mit einer Funktionalität von 2 und einer OH-Zahl von 56 mg KOH/g mit Diethyloxalat als Zusatzmittel |
| Polyesterol(b1-1): | Polyesterol auf Basis von Adipinsäure, Monoethylenglycol und Diethylenglykol mit einer OH-Zahl von 56 mg KOH/g |
| KV c-1: | Monoethylenglycol |
| Kat e1-1: | Triethylendiamin in Monoethylenglykol (33 Gew.-%) |
| Kat e2-1: | Triethylendiamin (25,5 Gew.-%) in Ethylenglykol (59 Gew.-%), Sebacinsäure (13,5 Gew.-%) und Wasser (2 Gew.-%) |
| Kat e2-2: | Triethylendiamin (33,7 Gew.-%) in Ethylenglykol (50,8 Gew.-%), Sebacinsäure (13,5 Gew.-%) und Wasser (2 Gew.-%) |
| Kat e2-3: | Triethylendiamin (19,5 Gew.-%) in Ethylenglykol (65,0 Gew.-%), Sebacinsäure (13,5 Gew.-%) und Wasser (2 Gew.-%) |
| Zusatz f-1: | Polysiloxan Silikon |

**Tabelle 1**

| | VB1-1 | B1-2 | B1-3 | B1-4 | B1-5 | B1-6 | B1-7 |
|---|---|---|---|---|---|---|---|
| Polyol b1-1 | 91,97 | 91,97 | 91,97 | 91,97 | 91,97 | 91,97 | 91,97 |
| KV c-1 | 5,50 | 5,50 | 5,50 | 5,50 | 5,50 | 5,50 | 5,50 |
| Kat e1-1 | 0,50 | 0,50 | 0,50 | 0,50 | 0,20 | 0,20 | 0,20 |
| Kat e2-1 | 0,00 | 0,56 | 1,06 | 1,36 | 0,90 | | |
| Kat e2-2 | | | | | | 0,90 | |
| Kat e2-3 | | | | | | | 0,90 |
| Molverh. Amin/Sebazinsäure | 1 : 0 | 1 : 0,13 | 1 : 0,18 | 1 : 0,20 | 1 : 0,23 | 1 : 0,18 | 1 : 0,28 |
| Gew.- % Amin* | 0,16 | 0,31 | 0,43 | 0,51 | 0,30 | 0,37 | 0,25 |
| Zusatz f-1 | 0,28 | 0,28 | 0,28 | 0,28 | 0,28 | 0,28 | 0,28 |
| Wasser | 0,26 | 0,26 | 0,26 | 0,26 | 0,26 | 0,26 | 0,26 |
| MV zu Iso a-1 | 100/69,9 | 100/72,1 | 100/74,1 | 100/75,3 | 100/72,3 | 100/71,8 | 100/72,6 |

| | | | | | | | |
|---|---|---|---|---|---|---|---|
| *bezogen auf die Komponenten (b) bis (f) | | | | | | | |

**Tabelle 2**

| Eigenschaft | VB1-1 | B1-2 | B1-3 | B1-4 | B1-5 | B1-6 | B1-7 |
|---|---|---|---|---|---|---|---|
| Startzeit [s] | 24 | 40 | 20 | 12 | 19 | 15 | 24 |
| Abbindezeit [s] | 71 | 103 | 60 | 35 | 54 | 44 | 65 |
| Steigzeit [s] | >280 | >240 | 230 | 120 | 160 | 143 | 224 |
| Rohdichte [g/L] | 390 | 320 | 296 | 338 | 370 | 373 | 375 |
| Knickzeit [min] | >8 | 7:30 | >7 | 4:15 | 6:30 | 6:00 | >8 |
| Entformzeit [min] | 6 | 6 | 6 | 6 | 6 | 6 | 6 |
| Dichte [g/L] | 689 | 622 | 667 | 678 | 674 | 686 | 664 |

Die besten Ergebnisse in einem Polyesterol (b1) basierten Stiefel lieferten Polyurethan-Systeme mit einem Molverhältnis des tertiären Amins (e1) zur Sebazinsäure (e2) von 1 : 0,19 bis 0,27. Hier bestand genug Zeit den Stiefel zu füllen (Startzeit größer 15 s) und gleichzeitig lieferten die Systeme vernünftige Abbinde-, Steig- und Knickzeiten (kleiner 7 min). Auch hat es sich als vorteilhaft erwiesen, den tertiären Amin-Katalysator in einer Konzentration von 0,3 bis 0,5 Gew.-%, bezogen auf die Komponenten (b) bis (f) einzusetzen.

### Beispiele 2 (Polyetherol (b2)-basiert)

Folgende Verbindungen wurden eingesetzt:

| | |
|---|---|
| Iso a-2: | Isocyanat-Prepolymer der Firma BASF auf Basis von 4.4-MDI, modifizierten Isocyanaten und einem Gemisch von Polyetherolen mit einer Funktionalität von 2 und einer OH-Zahl von 29,5 mg KOH/g mit Dipropylenglykol als Zusatzmittel |
| Polyetherol (b2-1): | Propylenglycol-gestartetes Polyetherpolyol mit OH Zahl von 29,5 und überwiegend primaren OH-Gruppen (Zusammensetzung 81,1 Gew.-% Propylenoxid, 18,5 Gew.-% Ethylenoxid mit einer OH-Zahl von 29,5 mg KOH/g) |
| Polyetherol (b2-2): | Glycerol-gestartetes Polyetherpolyol mit OH Zahl von 35 und überwiegend primaren OH-Gruppen (Zusammensetzung 84,4 Gew.-% Propylenoxid, 13,3 Gew.-% Ethylenoxid mit einer OH-Zahl von 35 mg KOH/g) |
| KV c-2: | 1,4 Butandiol |
| Kat e1-2: | Pentamethyldipropylen-triamin |
| Kat e2-1: | Triethylendiamin (25,5 Gew.-%) in Ethylenglykol (59 Gew.-%), Sebacinsäure (13,5 Gew.-%) und Wasser (2 Gew.-%) |
| Kat e2-2: | Triethylendiamin (33,7 Gew.-%) in Ethylenglykol (50,8 Gew.-%), Sebacinsäure (13,5 Gew.-%) und Wasser (2 Gew.-%) |
| Kat e2-3: | Triethylendiamin (19,5 Gew.-%) in Ethylenglykol (65,0 Gew.-%), Sebacinsäure (13,5 Gew.-%) und Wasser (2 Gew.-%) |
| Kat e3-1: | Dimethylzinncarboxylat |
| Zusatz f-1: | Polysiloxan Silikon |

**Tabelle 3**

| Gew.- % | B2-1 | B2-2 | B2-3 | B2-4 | B2-5 | B2-6 | B2-7 |
|---|---|---|---|---|---|---|---|
| Polyol b2-1 | 42,00 | 42,00 | 42,00 | 42,00 | 42,00 | 42,00 | 42,00 |
| Polyol b2-2 | 46,02 | 46,02 | 46,02 | 46,02 | 46,02 | 46,02 | 46,02 |
| KV c-2 | 9,00 | 9,00 | 9,00 | 9,00 | 9,00 | 9,00 | 9,00 |
| Kat e1-2 | 0,30 | 0,30 | 0,30 | 0,30 | 0,30 | 0,50 | 0,70 |
| Kat e2-1 | 2,00 | 2,20 | 2,40 | | | 2,40 | 2,40 |
| Kat e2-2 | | | | 2,40 | | | |
| Kat e2-3 | | | | | 2,40 | | |
| Kat e3-1 | 0,03 | 0,03 | 0,03 | 0,03 | 0,03 | 0,03 | 0,03 |
| Molverh. Amin/Sebazinsäure | 1 : 0,20 | 1 : 0,22 | 1 : 0,23 | 1 : 0,18 | 1 : 0,28 | 1 : 0,20 | 1 : 0,18 |
| Gew.- % Amin* | 0,8 | 0,86 | 0,91 | 1,20 | 0,77 | 1,1 | 1,3 |
| Zusatz f-1 | 0,30 | 0,30 | 0,30 | 0,30 | 0,30 | 0,30 | 0,30 |
| Wasser | 0,35 | 0,35 | 0,35 | 0,35 | 0,35 | 0,35 | 0,35 |
| MV zu Iso a-2 | 100/92 | 100/88 | 100/90 | 100/94 | 100/99 | 100/96 | 100/96 |

| | | | | | | | |
|---|---|---|---|---|---|---|---|
| • bezogen auf die Komponenten (b) bis (f) | | | | | | | |

**Tabelle 4**

| Eigenschaft | B2-1 | B2-2 | B2-3 | B2-4 | B2-5 | B2-6 | B2-7 |
|---|---|---|---|---|---|---|---|
| Startzeit [s] | 20 | 18 | 17 | 15 | 23 | 16 | 16 |
| Abbindezeit [s] | 47 | 49 | 48 | 45 | 61 | 46 | 45 |
| Steigzeit [s] | 101 | 104 | 101 | 90 | 120 | 95 | 98 |
| Rohdichte [g/L] | 472 | 454 | 432 | 421 | 443 | 408 | 398 |
| Knickzeit [min] | 5:30 | 5:30 | 4:30 | 4:15 | 6:00 | 4:15 | 4:15 |
| Entformzeit [min] | 6 | 6 | 6 | 6 | 6 | 6 | 6 |
| Dichte [g/L] | 704 | 693 | 699 | 703 | 687 | 680 | 689 |

Die besten Ergebnisse in einem Polyetherol (b2) basierten Stiefel lieferten Polyurethan-Systeme mit einem Molverhältnis des tertiären Amins (e1) zur Sebazinsäure (e2) von 1 : 0,19 bis 0,27. Hier bestand genug Zeit den Stiefel zu füllen (Startzeit größer 15 s) und gleichzeitig lieferten die Systeme vernünftige Abbinde-, Steig- und Knickzeiten (kleiner 6 min). Auch hat es sich als vorteilhaft erwiesen, den tertiären Amin-Katalysator (e1) in einer Konzentration von 0,8 bis 1,2 Gew.-%, bezogen auf die Komponenten (b) bis (f) einzusetzen.

## Patentansprüche

1. Verfahren zur Herstellung von Polyurethan-Stiefeln bei dem man
a) organische Polyisocyanate mit
b) Polyolen,
c) Kettenverlängerer,
d) Treibmittel,
e) Katalysator und
f) gegebenenfalls sonstigen Hilfsmittel und/oder Zusatzstoffe
zu einer Reaktionsmischung vermischt, und mit nur einer Einspritzung in eine Form gibt, die Sohle und Schaft des Stiefels umfasst und zu einem Polyurethan-Stiefel ausreagieren lässt, **dadurch gekennzeichnet, dass** zumindest ein Katalysator umfassend ein tertiäres Amin und Sebazinsäure in einem Molverhältnis von tertiärem Amin und Sebazinsäure von 1 : 0,19 bis 0,27 eingesetzt wird.

2. Verfahren nach 1, **dadurch gekennzeichnet, dass** als Polyisocyanat a) ein MDI eingesetzt wird.

3. Verfahren nach einem der Ansprüche 1 bis 2, **dadurch gekennzeichnet, dass** als Polyol b) ein Polyesterol (b1) eingesetzt wird.

4. Verfahren nach Anspruch 3, **dadurch gekennzeichnet, dass** das Polyesterpolyol (b1) durch Kondensation von aliphatischen Dicarbonsäuren mit 4 bis 10 C-Atomen mit einem difunktionellen und/oder trifunktionellen, aliphatischen Alkohol erhältlich ist.

5. Verfahren nach Anspruch 3 oder 4, **dadurch gekennzeichnet, dass** als tertiäres Amin e) Triethylendiamin in 0,3 bis 0,5 Gew.-%, bezogen auf die Komponenten b) bis f) eingesetzt wird.

6. Verfahren nach einem der Ansprüche 1 bis 2, **dadurch gekennzeichnet, dass** als Polyol b) ein Polyetherol (b2) eingesetzt wird.

7. Verfahren nach Anspruch 6, **dadurch gekennzeichnet, dass** als Polyetherol (b2) ein Propylenglykol- und/oder Glyceringestartes Polyetherol eingesetzt wird.

8. Verfahren nach Anspruch 6 oder 7, **dadurch gekennzeichnet, dass** als tertiäres Amin e) Triethylendiamin und Pentamethyldipropylen-Triamin in 0,8 bis 1,2 Gew.-% auf die Komponenten b) bis f) eingesetzt wird.

9. Verfahren nach einem der Ansprüche 1 bis89, **dadurch gekennzeichnet, dass** als Treibmittel Wasser eingesetzt wird.

10. Polyurethanform-Stiefel, erhältlich nach einem Verfahren gemäß einem der Ansprüche 1 bis 9.

11. Polyurethanform-Stiefel nach Anspruch 10, **dadurch gekennzeichnet, dass** der Stiefel ein Polyurethanintegralschaumstoff mit einer Dichte von 150 bis 950 g/L ist.

## Claims

1. A process for producing polyurethane boots wherein
a) organic polyisocyanates are mixed with
b) polyols,
c) chain extender,
d) blowing agent,
e) catalyst and
f) optionally other auxiliaries and/or additives
to afford a reaction mixture and in only one injection introduced into a mold comprising the sole and the upper of the boot and allowed to react to form a polyurethane boot, wherein at least one catalyst comprising a tertiary amine and sebacic acid is employed in a molar ratio of tertiary amine to sebacic acid of 1: 0.19 to 0.27.

2. The process according to 1, wherein an MDI is used as polyisocyanate a).

3. The process according to either of claims 1 and 2, wherein a polyesterol (b1) is used as polyol b).

4. The process according to claim 3, wherein the polyester polyol (b1) is obtainable by condensation of aliphatic dicarboxylic acids having 4 to 10 carbon atoms with a difunctional and/or trifunctional aliphatic alcohol.

5. The process according to claim 3 or 4, wherein as tertiary amine e) triethylenediamine is employed in an amount of 0.3% to 0.5% by weight based on the components b) to f).

6. The process according to either of claims 1 and 2, wherein a polyetherol (b2) is used as polyol b).

7. The process according to claim 6, wherein a propylene glycol-started and/or glycerol-started polyetherol is employed as polyetherol (b2).

8. The process according to claim 6 or 7, wherein as tertiary amine e) triethylenediamine and pentamethyldipropylenetriamine is employed in an amount of 0.8% to 1.2% by weight based on the components b) to f).

9. The process according to any of claims 1 to 8, wherein water is employed as the blowing agent.

10. A polyurethane boot obtainable by a process according to any of claims 1 to 9.

11. The polyurethane boot according to claim 10, wherein the boot is a polyurethane integral foam having a density of 150 to 950 g/L.

## Revendications

1. Procédé pour la préparation de bottes de polyuréthane dans lequel on mélange
a) des polyisocyanates organiques avec
b) des polyols,
c) des agents d'extension de chaînes,
d) des agents gonflants,
e) un catalyseur et
f) éventuellement d'autres auxiliaires et/ou additifs
pour donner un mélange réactionnel, et on fournit en une seule injection à un moule qui comprend la semelle et le corps de la botte et on laisse réagir pour donner une botte de polyuréthane, **caractérisé en ce qu'**au moins un catalyseur est utilisé comprenant une amine tertiaire et de l'acide sébacique en un rapport molaire d'amine tertiaire et d'acide sébacique de 1 : 0,19 à 0,27.

2. Procédé selon 1, **caractérisé en ce qu'**un MDI est utilisé en tant que polyisocyanate a).

3. Procédé selon l'une quelconque des revendications 1 à 2, **caractérisé en ce qu'**un polyesterol (b1) est utilisé en tant que polyol b).

4. Procédé selon la revendication 3, **caractérisé en ce que** le polyesterpolyol (b1) peut être obtenu par condensation d'acides dicarboxyliques aliphatiques comportant 4 à 10 atomes de C avec un alcool aliphatique difonctionnel et/ou trifonctionnel.

5. Procédé selon la revendication 3 ou 4, **caractérisé en ce que** de la triéthylènediamine est utilisée, en tant qu'amine tertiaire e), en une quantité de 0,3 à 0,5 % en poids, par rapport aux composants b) à f).

6. Procédé selon l'une quelconque des revendications 1 à 2, **caractérisé en ce qu'**un polyétherol (b2) est utilisé en tant que polyol b).

7. Procédé selon la revendication 6, **caractérisé en ce qu'**un polyétherol amorcé par le propylèneglycol et/ou la glycérine est utilisé en tant que polyétherol (b2).

8. Procédé selon la revendication 6 ou 7, **caractérisé en ce que** de la triéthylènediamine et de la pentaméthyldipropylène-triamine sont utilisées, en tant qu'aminé tertiaire e), en une quantité de 0,8 à 1,2 % en poids par rapport aux composants b) à f).

9. Procédé selon l'une quelconque des revendications 1 à 8, **caractérisé en ce que** de l'eau est utilisée en tant qu'agent gonflant.

10. Botte de forme de polyuréthane, qui peut être obtenue par un procédé selon l'une quelconque des revendications 1 à 9.

11. Botte de forme de polyuréthane selon la revendication 10, **caractérisée en ce que** la botte est une mousse intégrale de polyuréthane dotée d'une densité de 150 à 950 g/L.
